# EUROPÄISCHE PATENTSCHRIFT

(11) **EP 1 477 346 B1**
(45) Veröffentlichungstag und Bekanntmachung des Hinweises auf die Patenterteilung: **02.05.2007**
(21) Anmeldenummer: 04011266.6
(22) Anmeldetag: 12.05.2004
(51) Int. Cl.: B60H 1/00

(54) **Entkoppeltes Gebläse**
Decoupled Blower
Ventilateur découplé

(30) Priorität: 12.05.2003 DE 10321394
(43) Veröffentlichungstag der Anmeldung: 17.11.2004
(73) Patentinhaber: Behr GmbH & Co. KG, 70469 Stuttgart (DE)
(72) Erfinder: Wolf, Walter, 71570 Oppenweilser-Zell (DE)

(56) Entgegenhaltungen:
- DE-C1- 4 238 895
- DE-U1- 9 104 643
- US-A- 4 807 718
- "FAN VIBRATION ISOLATOR" IBM TECHNICAL DISCLOSURE BULLETIN, IBM CORP. NEW YORK, US, Bd. 33, Nr. 1B, 1. Juni 1990 (1990-06-01), Seiten 197-198, XP000122860 ISSN: 0018-8689

## Beschreibung

Die Erfindung betrifft ein entkoppeltes Gebläse, insbesondere für ein Kraftfahrzeug, gemäß dem Oberbegriff des Anspruchs 1.

Zur Vermeidung oder Verminderung von Schwingungen oder deren Übertragung auf Teile einer Klimaanlage oder eines Cockpits und damit verbundener Geräusche wird der Gebläsemotor über eine elastische Lagerung entkoppelt. Eine derartige Entkoppelung lässt jedoch in Hinblick auf variierende Spaltverhältnisse noch Wünsche offen.

Aus der DE 42 38 895 C1 ist ein Ventilatoraggregat zum Einbau in einen Luftkanal eines raumlufttechnischen Gerätes bekannt, bei welchem der Motorträger mit einem Dämpfer und das Ventilatoraggregat mit einer umlaufenden Dichtung im Luftkanal abgestützt sind.

Es ist Aufgabe der Erfindung, ein verbessertes entkoppeltes Gebläse zur Verfügung zu stellen.

Diese Aufgabe wird gelöst durch ein entkoppeltes Gebläse mit den Merkmalen des Anspruchs 1. Vorteilhafte Ausgestaltungen sind Gegenstand der Unteransprüche.

Gemäß dem Stand der Technik ist bei einem entkoppelten Gebläse das Spiralgehäuse mit Lüfterrad und Gebläsemotor entkoppelt, wobei der Gebläsemotor fest mit dem Spiralgehäuse und dem Lüfterrad verbunden ist. Durch die feste Verbindung von Gebläsemotor, Spiralgehäuse und Lüfterrad ist ein festes Spaltmaß gegeben. Ein Taumeln des Lüfterrades im Spiralgehäuse wird vermieden. Ferner kann die Montage auf einfache Weise erfolgen, wodurch die Herstellungskosten gesenkt werden können.

Aus dem Stand der Technik ist eine Stellvorrichtung zur Einstellung des Spaltmaßes, insbesondere in axialer Richtung des Lüfters bekannt. Die Einstellbarkeit des Spaltmaßes für den Lüfter und/oder das Spiralgehäuse ermöglicht größere Toleranzen, wodurch die Herstellungskosten gesenkt werden können. Hierbei kann die Stellvorrichtung für das Spaltmaß das Spiralgehäuse zum Lüfter und/oder den Lüfter im Spiralgehäuse positionieren.

Erfindungsgemäß weist die Stellvorrichtung zur Einstellung des Spaltmaßes ein Gewinde auf, welches eine Längsverstellung bewirkt. Vorzugsweise ist ein Gewinde im Spiralgehäuse oder fest mit demselben verbunden ein Gewinde vorgesehen, in das eine das Gewinde zur Verfügung stellende Schraube geschraubt ist. Zur Sicherung ist bevorzugt eine Kontermutter vorgesehen. Alternativ können auch Rastnasen oder andere Sicherungsmittel vorgesehen sein.

Bevorzugt ist die Entkoppelung am Übergang vom Spiralgehäuse zur Klimaanlage und/oder an der Befestigung des Spiralgehäuses an einem Strukturteil vorgesehen. Hierbei wird das Strukturteil bevorzugt durch einen Querträger oder eine Wand gebildet.

Die Entkoppelung erfolgt vorzugsweise über Schraubverbindungen, wobei jeweils zwischen Schraube und Spiralgehäuse ein elastisches Element vorgesehen ist. Dieses elastische Element ist bevorzugt im Wesentlichen zylinderförmig ausgebildet, wobei etwa mittig eine umlaufende Nut vorgesehen ist, in welcher das Spiralgehäuse angeordnet ist.

Bevorzugt ist zwischen der Schraube und dem elastischen Element eine Hülse vorgesehen, welche das elastische Element vor der Schraube schützt, sowie die Distanz des Einschraubens der Schraube festlegt.

Die Entkoppelung erfolgt über die Weichheit der Verbindung von Spiralgehäuse zu einer Klimaanlage.

Eine Stellvorrichtung zur Einstellung in Querrichtung der Lüfterraddrehachse wird bevorzugt durch einen verstellbaren Einlaufzargen, mittels einer Schraubverbindung oder mittels eines Bajonettverschlusses mit unterschiedlichen Tiefen gebildet.

Im Folgenden wird die Erfindung anhand der Ausführungsbeispiele, teilweise unter Bezugnahme auf die Zeichnung, im Einzelnen erläutert. In der Zeichnung zeigen:

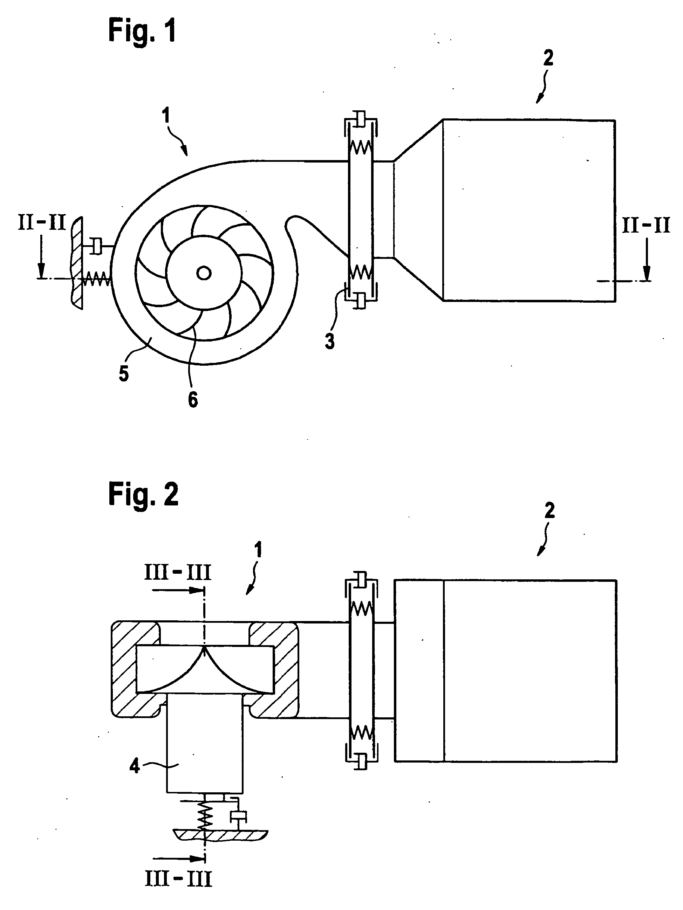

- Fig. 1: einen vereinfacht dargestellten Schnitt in der Draufsicht durch einen Gebläsetrakt und einen Teil eines Klimatrakts einer Klimaanlage gemäß dem ersten Ausführungsbeispiel,
- Fig. 2: einen Schnitt quer durch Fig. 1 entlang der Linie II-II,
- Fig. 3: einen Schnitt quer durch Fig. 2 entlang der Linie III-III, und
- Fig. 4: einen vergrößert dargestellten Schnitt durch eine Entkoppelvorrichtung, und
- Fig. 5: einen Schnitt quer durch Fig. 2 entlang der Linie III-III in einem zweiten erfindungsgemäßen Ausführungsbeispiel.

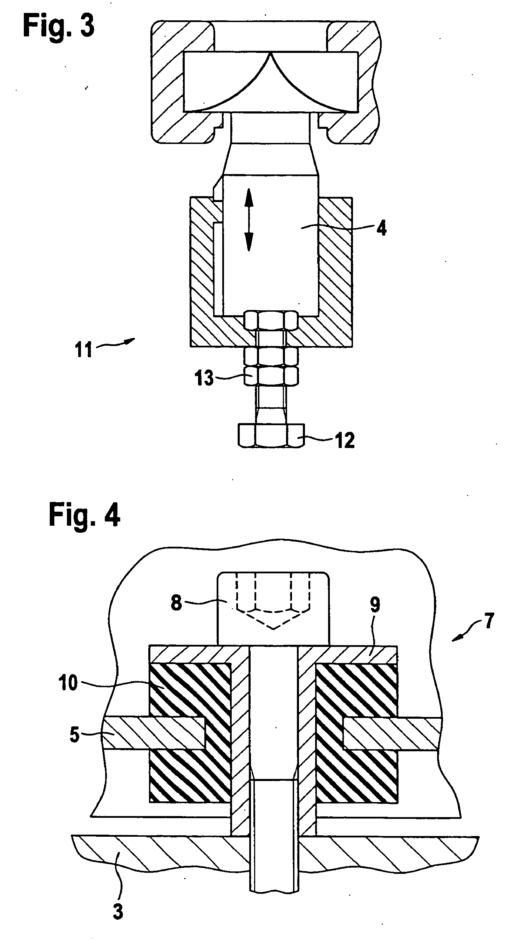

Eine Klimaanlage für ein Kraftfahrzeug mit einem Gebläsetrakt 1 und einem Klimatrakt 2, welche durch eine Wand 3 getrennt sind, weist im Gebläsetrakt 1 einen Gebläsemotor 4, der mittels einer Lagerung gelagert ist, und ein Spiralgehäuse 5 mit einem Lüfterrad 6 auf. Hierbei ist der Gebläsemotor 4 über seine Lagerung fest mit dem Spiralgehäuse 5 sowie dem Lüfterrad 6 verbunden. Die Gesamtheit des Gebläsetrakts 1 ist mittels mehrerer Entkoppelvorrichtungen 7, wobei ein Schnitt durch eine derselben in Fig. 4 vergrößert dargestellt ist, mit der Wand 3 verbunden. Der Klimatrakt 2 ist gemäß dem ersten Ausführungsbeispiel starr mit der Wand 3 verbunden.

Jede Entkoppelvorrichtung 7 umfasst eine Schraube 8, welche fest in die Wand 3 eingeschraubt ist, eine auf die Schraube 8 geschobene Hülse 9 und ein auf die Hülse 9 geschobenes elastisches Element 10, vorliegend einem Elastomer. Das elastische Element 10 hat eine im Wesentlichen zylindrische Gestalt mit einer umlaufenden Nut. Das Spiralgehäuse 5 weist mehrere entsprechend positionierte und entsprechend dem Durchmesser der Nut ausgebildete Bohrungen auf, in welche die jeweilige Entkoppelvorrichtung 7 gesteckt ist.

Erfindungsgemäß ist zur Einstellung des Spaltmaßes zwischen Spiralgehäuse 5 und Lüfterrad 6 eine Stellvorrichtung 11 vorgesehen, welche im Wesentlichen aus einer fest in das Motorgehäuse geschraubte Schraube 12, die in ein Gewinde im Spiralgehäuse 5 geschraubt und mittels einer Kontermutter 13 gesichert ist. Durch ein Verdrehen der Schraube 12 nach dem Lösen der Kontermutter 13 lässt sich die Längsposition des Lüfterrades 6 im Spiralgehäuse 5 einfach einstellen. Nach dem Einstellen erfolgt die Sicherung mittels der Kontermutter 13.

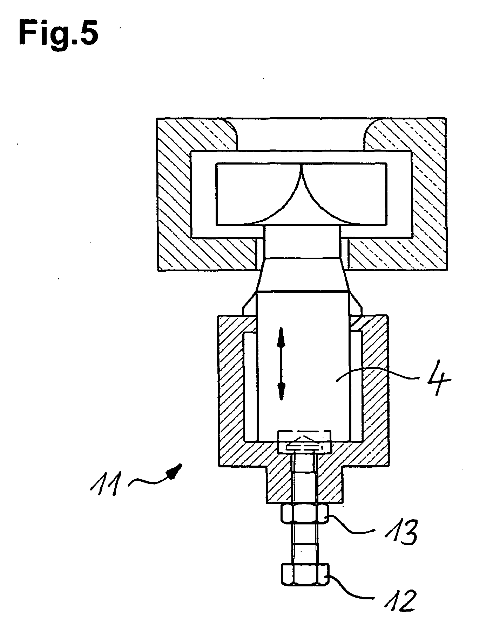

In einem zweiten erfindungsgemäßen Ausführungsbeispiel zeigt Fig.5 zur Einstellung des Spaltmaßes zwischen Spiralgehäuse 5 und Lüfterrad 6 eine Stellvorrichtung 11, bei der die Schraube 12 zur Verstellung des Spaltmaßes mit einem stumpfwinkeligen kegelförmigen Ende versehen ist, welches die axiale Verschiebung beim Verdrehen der Schraube auf einen Anschlussbereich des Gebläsemotors 14 überträgt. Gesichert wird die Schraube 12 wieder mittels einer Kontermutter 13.

Am Motor kann gemäß einem weiteren, nicht in der Zeichnung dargestellten Ausführungsbeispiel ein der Welle des Motors, welche das Lüfterrad trägt, gegenüberliegend angeordneter, höhenverstellbarer Deckel mit einem Gewinde vorgesehen sein, der zur Einstellung des Spaltmaßes dient (Stellvorrichtung) und starr mit einer Wand verbunden ist oder mit derselben verbunden werden kann. Zur Abstützung des Motors gegen auf denselben einwirkende Momente, welche unter Umständen ein Verstellen des eingestellten Spaltmaßes bewirken können, ist seitlich am Motorgehäuse mindestens eine Drehmomentenstütze in Form eines mit einer an der Wand vorgesehenen Schulter zusammenwirkenden Vorsprunges vorgesehen.

Zur Sicherung des Deckels am Motorgehäuse sind über den Umfang desselben gleichmäßig verteilt zwei Sicherungsschrauben vorgesehen, die den Deckel mit dem Motorgehäuse verspannen und somit sichern. Zur Unterstützung deren Wirkung können im Motorgehäuse Nuten vorgesehen sein, die in Längsrichtung desselben verlaufen und in die die Sicherungsschrauben eingreifen.

Zur Einstellung des Spaltmaßes sind beliebige andere Stellvorrichtungen möglich, wie zum Beispiel das Vorsehen von Rastöffnungen im bevorzugt zylinderförmig ausgebildeten Motorgehäuse, die mit sich in radialer Richtung angeordneten Verriegelungsbolzen zusammenwirken. Hierbei sind vorzugsweise drei Verriegelungsbolzen gleichmäßig über den Umfang verteilt vorgesehen.

### Bezugszeichenliste

- 1: Gebläsetrakt
- 2: Klimatrakt
- 3: Wand
- 4: Gebläsemotor
- 5: Spiralgehäuse
- 6: Lüfterrad
- 7: Entkoppelvorrichtung
- 8: Schraube
- 9: Hülse
- 10: elastisches Element
- 11: Stellvorrichtung
- 12: Schraube
- 13: Kontermutter

## Patentansprüche

1. Gebläse mit einer entkoppelten Befestigungsvorrichtung, die an einem Strukturteil eines Fahrzeugs oder Gehäuse einer Klimaanlage anordenbar ist, mit einem Gebläsemotor (4), der mittels einer Lagerung gelagert ist, einem Spiralgehäuse (5) mit Lüfterrad (6) wobei das Spiralgehäuse (5) mit Lüfterrad (6) und Gebläsemotor (4) entkoppelt ist und einer Stellvorrichtung (11) zur Einstellung des Spaltmaßes, **dadurch gekennzeichnet, dass** die Stellvorrichtung (11) zur Einstellung des Spaltmaßes in Längsrichtung der Lüfterraddrehachse ein Gewinde aufweist, welches eine Längsverstellung bewirkt.

2. Gebläse nach Anspruch 1, **dadurch gekennzeichnet, dass** die Entkoppelung am Übergang vom Spiralgehäuse (5) zu einem Klimatrakt (2) der Klimaanlage und/oder an der Befestigung des Spiralgehäuses (5) an einem Strukturteil vorgesehen ist.

3. Gebläse nach Anspruch 2, **dadurch gekennzeichnet, dass** das Strukturteil ein Querträger oder eine Wand (3) ist.

4. Gebläse nach einem der vorhergehenden Ansprüche, **dadurch gekennzeichnet, dass** die Entkoppelung über Schraubverbindungen erfolgt, wobei zwischen Schraube (8) und Spiralgehäuse (5) ein elastisches Element (10) vorgesehen ist.

5. Gebläse nach Anspruch 4, **dadurch gekennzeichnet, dass** zwischen der Schraube (8) und dem elastischen Element (10) eine Hülse (9) vorgesehen ist.

6. Gebläse nach Anspruch 1 oder 2, **dadurch gekennzeichnet, dass** die Entkoppelung über die Weichheit der Verbindung von Spiralgehäuse (5) zu einer Klimaanlage erfolgt.

7. Gebläse nach Anspruch 6, **dadurch gekennzeichnet, dass** die Entkoppelung über eine 2-Komponenten-Verbindung, eine Hart-Weich-Kombination, eine teilweise Filmscharnier-Verbindung, ein Abdichtelement zwischen Spiralgehäuse und Klimaanlage und/oder mittels Zusammenspritzen und/oder über die Montage-Verbindung erfolgt.

8. Gebläse nach einem der vorhergehenden Ansprüche, **dadurch gekennzeichnet, dass** im Spiralgehäuse (5) oder fest mit demselben verbunden ein Gewinde vorgesehen ist, in das eine das Gewinde zur Verfügung stellende Schraube (12) geschraubt ist

9. Gebläse nach einem der vorhergehenden Ansprüche, **dadurch gekennzeichnet, dass** auf das Gewinde eine Kontermutter (13) geschraubt ist.

10. Gebläse nach einem der vorhergehenden Ansprüche, **dadurch gekennzeichnet, dass** eine Stellvorrichtung zur Einstellung der Position quer zur Längsrichtung der Lüfterraddrehachse vorgesehen ist.

## Claims

1. Blower with a decoupled fixing device, which can be mounted on a structural component of a vehicle or on a housing of an air-conditioning unit, with a fan motor (4) mounted on a bearing, a spiral housing (5) with a fan rotor (6), such that the spiral housing (5) with the fan rotor (6) and the fan motor (4) is decoupled, and with an adjustment device (11) for adjusting the gap size, **characterised in that** the adjustment device (11) for adjusting the gap size comprises a thread in the longitudinal direction of the fan rotor's rotation axis, which enables length adjustment.

2. Blower according to Claim 1, **characterised in that** the decoupling is provided at the transition from the spiral housing (5) to a duct (2) of the air-conditioning unit and/or at the fixing point of the spiral housing (5) to a structural component.

3. Blower according to Claim 2, **characterised in that** the structural component is a cross-beam or a wall (3).

4. Blower according to any of the preceding claims, **characterised in that** the decoupling is effected by screw connections, an elastic element (10) being provided between the screws (8) and the spiral housing (5).

5. Blower according to Claim 4, **characterised in that** a sleeve (9) is provided between the screws (8) and the elastic element (10).

6. Blower according to Claims 1 or 2, **characterised in that** the decoupling is effected by virtue of the elasticity of the connection of the spiral housing (5) to an air-conditioning unit.

7. Blower according to Claim 6, **characterised in that** the decoupling is effected by means of a 2-component connection, a hard-soft combination, a partial film-hinge joint, a sealing element between the spiral housing and the air-conditioning unit and/or by means of combined injection moulding and/or via the mounting joint.

8. Blower according to any of the preceding claims, **characterised in that** a thread is provided in the spiral sousing (5) or in fixed connection therewith, into which a screw (12) that makes the thread available is screwed.

9. Blower according to any of the preceding claims, **characterised in that** a locking nut (13) is screwed onto the thread.

10. Blower according to any of the preceding claims, **characterised in that** an adjustment device is provided for adjusting the position transversely to the longitudinal direction of the rotation axis of the fan rotor.

## Revendications

1. Ventilateur comportant un dispositif de fixation découplé, qui peut être monté sur un élément structurel d'un véhicule automobile ou un carter d'une installation de climatisation, comportant un moteur de ventilateur (4) qui est monté au moyen d'un palier, un carter hélicoïdal (5) avec une roue de ventilateur (6), le carter hélicoïdal (5) étant découplé avec la roue de ventilateur (6) et le moteur de ventilateur (4), et un dispositif de réglage (11) destiné à régler la valeur de la fente, **caractérisé en ce que** le dispositif de réglage (11) destiné à régler la valeur de la fente comporte, dans le sens longitudinal de l'axe de rotation de la roue de ventilateur, un filetage qui induit un réglage de la longueur.

2. Ventilateur selon la revendication 1, **caractérisé en ce que** le découplage est prévu au niveau de la transition entre le carter hélicoïdal (5) et le corps (2) de l'installation de climatisation et/ou au niveau de la fixation du carter hélicoïdal (5) contre un élément structurel.

3. Ventilateur selon la revendication 2, **caractérisé en ce que** l'élément structurel est un traverse ou une paroi (3).

4. Ventilateur selon l'une quelconque des revendications précédentes, **caractérisé en ce que** le découplage est assuré par des assemblages filetés, un élément élastique (10) étant prévu entre la vis (8) et le carter hélicoïdal (5).

5. Ventilateur selon la revendication 4, **caractérisé en ce qu'**une douille (9) est prévue entre la vis (8) et l'élément élastique (10).

6. Ventilateur selon la revendication 1 ou 2, **caractérisé en ce que** le découplage est assuré par la flexibilité de l'assemblage du carter hélicoïdal (5) contre une installation de climatisation.

7. Ventilateur selon la revendication 6, **caractérisé en ce que** le découplage est assuré par l'intermédiaire d'un assemblage à deux composants, une combinaison dure-molle, un assemblage partiellement par un film formant charnière, un élément d'étanchéité entre le carter hélicoïdal et l'installation de climatisation et/ou au moyen d'un assemblage par injection et/ou par l'intermédiaire de l'assemblage de montage.

8. Ventilateur selon l'une quelconque des revendications précédentes, **caractérisé en ce qu'**il est prévu un filetage, qui est réalisé dans le carter hélicoïdal (5) ou est assemblé de manière fixe à celui-ci et dans lequel est vissée une vis (12) comportant le filetage.

9. Ventilateur selon l'une quelconque des revendications précédentes, **caractérisé en ce qu'**un contre-écrou (13) est vissé sur le filetage.

10. Ventilateur selon l'une quelconque des revendications précédentes, **caractérisé en ce qu'**il est prévu un dispositif de réglage destiné à régler la position perpendiculairement à la direction longitudinale de l'axe de rotation de la roue de ventilateur.
